# EUROPEAN PATENT APPLICATION

(11) **EP 3 852 218 A1**
(43) Date of publication of application: **21.07.2021**
(21) Application number: 20188444.2
(22) Date of filing: 29.07.2020
(51) Int. Cl.: H02J 7/00, H02J 50/10, H02J 50/40

(54) **WIRELESS CHARGING METHOD AND APPARATUS, TERMINAL DEVICE, CHARGING SYSTEM, AND STORAGE MEDIUM**

(30) Priority: 14.01.2020 CN 202010038666
(71) Applicant: Beijing Xiaomi Mobile Software Co., Ltd., Beijing 100085 (CN)
(72) Inventor: SUN, Changyu, Beijing, Beijing 100085 (CN); SUN, Wei, Beijing, Beijing 100085 (CN)
(74) Representative: dompatent von Kreisler Selting Werner - Partnerschaft von Patent- und Rechtsanwälten mbB

(57) **Abstract**

A wireless charging method, applied to a terminal device including a plurality of antennas, comprises: transmitting or receiving a communication signal through the plurality of antennas; and determining a target antenna among the plurality of antennas in response to that a charging trigger operation is detected, receiving at least an energy supply signal through the target antenna, and transmitting and receiving a communication signal through an antenna other than the target antenna among the plurality of antennas

## Description

### BACKGROUND

With the rapid popularization and development of terminal devices, energy supply of the terminal devices has become an increasingly prominent problem. Wireless charging technologies provide a new solution for the energy supply of the terminal devices.

### SUMMARY

The present disclosure generally relates to the field of wireless charging technology, and more specifically to a wireless charging method and apparatus, a terminal device, a charging system, and a storage medium.

In a first aspect, embodiments of the present disclosure provide a wireless charging method, which is applied to a terminal device including a plurality of antennas, and the method includes:
transmitting or receiving a communication signal through the plurality of antennas; and
determining a target antenna among the plurality of antennas in response to that a charging trigger operation is detected, receiving at least an energy supply signal through the target antenna, and transmitting and receiving a communication signal through an antenna other than the target antenna among the plurality of antennas.

In some embodiments, the receiving at least an energy supply signal through the target antenna among the plurality of antennas includes:
determining whether remaining charge level of the terminal device is greater than a set charge level value; and
if the remaining charge level of the terminal device is greater than a predetermined charge level value, then receiving the energy supply signal and the communication signal through the target antenna; and if the remaining charge level of the terminal device is not greater than a predetermined charge level value, then receiving the energy supply signal through the target antenna.

In some embodiments, the receiving at least an energy supply signal through the target antenna includes:
receiving the communication signal through the target antenna in a first time slot; and
receiving the energy supply signal through the target antenna in a second time slot, and a width of the first time slot being greater than a width of the second time slot.

In some embodiments, the receiving at least an energy supply signal through the target antenna further includes:
counting the number of first time slots in which the communication signal is not continuously received; and
receiving the energy supply signal through the target antenna in the first time slot in response to that the number reaches a set number.

In some embodiments, the receiving at least an energy supply signal through the target antenna includes:
receiving the communication signal through the target antenna on a first channel; and
receiving the energy supply signal through the target antenna on a second channel, and a bandwidth of the first channel being greater than a bandwidth of the second channel.

In some embodiments, the determining a target antenna among the plurality of antennas includes: determining the target antenna based on signal strengths of the plurality of antennas.

In a second aspect, embodiments of the present disclosure provide a wireless charging apparatus, which is applied to a terminal device including a plurality of antennas, and the apparatus includes:
a first operating module configured to transmit or receive a communication signal through the plurality of antennas; and
a second operating module configured to determine a target antenna among the plurality of antennas in response to that a charging trigger operation is detected, receive at least an energy supply signal through the target antenna, and transmit and receive a communication signal through an antenna other than the target antenna among the plurality of antennas.

In some embodiments, the second operating module is specifically configured to, when receiving at least an energy supply signal:
determine whether remaining charge level of the terminal device is greater than a set charge level value; and
if the remaining charge level of the terminal device is greater than a predetermined charge level value, then receive the energy supply signal and the communication signal through the target antenna; and if the remaining charge level of the terminal device is not greater than a predetermined charge level value, then receive the energy supply signal through the target antenna.

In some embodiments, the second operating module is specifically configured to, when receiving at least an energy supply signal:
receive the communication signal through the target antenna in a first time slot; and
receive the energy supply signal through the target antenna in a second time slot, and a width of the first time slot being greater than a width of the second time slot.

In some embodiments, the second operating module includes:
a statistics unit configured to count the number of first time slots in which the communication signal is not continuously received; and
a receiving unit configured to receive the energy supply signal in the first time slot through the target antenna, in response to that the number reaches a set number.

In some embodiments, the second operating module is specifically configured to, when receiving at least an energy supply signal:
receive the communication signal through the target antenna on a first channel; and
receive the energy supply signal through the target antenna on a second channel, and a bandwidth of the first channel being greater than a bandwidth of the second channel.

In some embodiments, the second operating module is specifically configured to, when determining a target antenna among the plurality of antennas:
determine the target antenna based on signal strengths of the plurality of antennas.

In a third aspect, embodiments of the present disclosure provide a wireless charging apparatus, including:
a plurality of antennas;
a control module connected to the plurality of antennas, including a communicating state and a charging state;
a communicating circuit connected to the control module, and configured to transmit or receive a communication signal through the antennas when the control module is in the communicating state; and
a charging circuit connected to the control module, and configured to receive an energy supply signal through the antennas when the control module is in the charging state;
wherein a target antenna among the plurality of antennas is controlled to be connected with the charging circuit, and an antenna other than the target antenna among the plurality of antennas is controlled to be connected with the communicating circuit, by the control module, in response to in response to that a charging trigger operation is detected.

In some embodiments, wherein the communicating circuit includes:
a receiving circuit configured to convert a communication signal received by the antennas into a digital signal; and
a transmitting circuit configured to convert a digital signal to be transmitted into an analog signal for being transmitted through the antennas.

In a fourth aspect, embodiments of the present disclosure provide a terminal device, including:
a plurality of antennas;
a memory storing executable instructions; and
a processor configured to execute executable instructions in the memory to implement steps of the wireless charging method provided according to the above first aspect.

In a fifth aspect, embodiments of the present disclosure provide a charging system, including: a charging apparatus. and a terminal device provided according to the above fourth aspect;
wherein the charging apparatus transmits an energy supply signal to the terminal device in response to a charging request transmitted by the terminal device, so that an antenna of the terminal device receives the charging request.

In a sixth aspect, embodiments of the present disclosure provide a readable storage medium having executable instructions stored thereon, wherein steps of the wireless charging method provided above according to the first aspect are implemented when the executable instructions are executed by a processor of a terminal device.

It is to be understood that both the foregoing general description and the following detailed description are exemplary and explanatory only and are not restrictive of the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
FIG. 1 is a block diagram of a terminal device according to some embodiments;
FIG. 2 is a circuit diagram of a wireless charging apparatus according to some embodiments;
FIG. 3 is a schematic flowchart of a wireless charging method according to some embodiments;
FIG. 4 is a schematic flowchart of a wireless charging method according to another exemplary embodiment;
FIG. 5 is a schematic flowchart of a wireless charging method according to another exemplary embodiment;
FIG. 6 is a schematic flowchart of a wireless charging method according to another exemplary embodiment;
FIG. 7 is a schematic flowchart of a wireless charging method according to another exemplary embodiment;
FIG. 8 is a schematic flowchart of a wireless charging method according to another exemplary embodiment;
FIG. 9 is a block diagram of a wireless charging apparatus according to some embodiments;
FIG. 10 is a block diagram of a wireless charging apparatus according to another exemplary embodiment; and
FIG. 11 is a structural block diagram of a terminal device according to some embodiments.

### DETAILED DESCRIPTION

Description will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure as recited in the appended claims.

The terminology used herein is for the purpose of describing particular implementations only, not intended to be limiting. Unless otherwise defined, the technical or scientific terms used in the present disclosure shall have the common meanings understood by those with ordinary skills in the art. Also, similar words such as "a" or "an" do not indicate a limit on quantity, but rather indicate that there is at least one. Similar words such as "include" or "comprise" mean that the elements or articles before "include" or "comprise" encompass the elements or articles listed after "include" or "comprise" and their equivalents, without excluding other elements or objects. Words such as "connected" or "connecting" are not limited to physical or mechanical connections, but can include electrical connections, regardless of direct or indirect connections.

The singular forms "a," "said" and "the" as used in the specification and claims also are intended to include the plural form, unless otherwise indicated in a clear way. It should also be understood that the term "and/or" as used herein means encompassing any and all possible combinations of one or more of the associated listed items.

A wireless charging method can be based on the principle of electromagnetic conversion. When this method is used, a charging coil needs to be provided in both the terminal device and the charging apparatus. The terminal device is placed on the charging apparatus at the time of charging, so that the charging coil of the terminal device is induced by the magnetic field change of the charging coil of the charging apparatus to generate a charging current, thereby realizing wireless charging.

A charging coil may need to be provided in the terminal device, which has a relatively large volume and occupies the stacking space inside the terminal device, making it difficult for the terminal device to meet requirements for thin and light-weight designs.

In addition, the terminal device may have to maintain a relatively stable location relationship with the charging apparatus, such that the charging coil of the terminal device can generate an induced current due to a change in the magnetic field of the charging coil in the charging apparatus. Generally, the charging apparatus includes a charging stand, and the terminal device is placed on the charging stand at the time of use. This may also limit application scenarios of the terminal device. For example, it may be inconvenient for the user to hold the terminal device to use it while charging.

Various embodiments of the present disclosure provide a wireless charging method and apparatus, a terminal device, a charging system, and a storage medium.

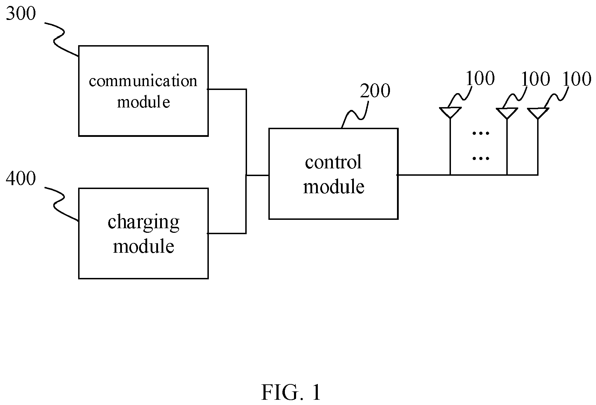

Before explaining the wireless charging method provided by embodiments of the present disclosure, a hardware structure of a terminal device adapted to the wireless charging method is first introduced. FIG. 1 is a block diagram of a terminal device according to embodiments of the present disclosure.

As shown in FIG. 1, the terminal device provided by embodiments of the present disclosure includes a plurality of antennas 100, a control module 200, a communication module 300, and a charging module 400.

The plurality of antennas 100 are radio frequency antennas, and are disposed at different positions of the terminal device. In some embodiments, the plurality of antennas 100 are disposed respectively on the upper and lower portions of the terminal device. In this way, the signal strength of different antennas 100 is different in different use scenarios, part of the antennas 100 with stronger signal strength can be selected as the main operating antenna based on signal strengths of the plurality of antennas 100 so as to ensure the communication effects of the terminal device.

The plurality of antennas 100 are connected to the control module 200. The control module 200 is used to control the antennas 100 to transmit a signal, such as a communication signal. The control module 200 is also used to control the antennas 100 to receive a signal, such as a communication signal or an energy supply signal. For example, the antennas 100 receive an energy supply signal transmitted by a charging apparatus in the form of a radio frequency, and the frequency bands of the energy supply signal and the communication signal are different. The control module 200 controls the antennas 100 to receive an energy supply signal or a communication signal by means of frequency modulation.

The control module 200 is also connected to the communication module 300. The communication module 300 transmits a signal to be transmitted to the control module 200 so that the control module 200 controls the antennas 100 to transmit a communication signal in a set frequency band based on the signal to be transmitted. The communication module 300 further receives a first output signal of the control module 200. Herein, the control module 200 outputs the first output signal based on the communication signal received by the antennas 100.

The control module 200 is further connected to the charging module 400. The charging module 400 receives a second output signal of the control module 200, and the control module 200 outputs the second output signal based on the power supply signal received by the antennas 100. The charging module 400 converts the received second output signal into electric energy and stores it in a battery of the terminal device, thereby realizing charging of the terminal device.

The operating states of the terminal device provided by embodiments of the present disclosure include a charging state and a non-charging state. In a non-charging state, the communication signal is received and/or transmitted through the antennas 100; in a charging state, the communication signal is transmitted through the antennas 100, and the communication signal and the energy supply signal are received through the antennas 100.

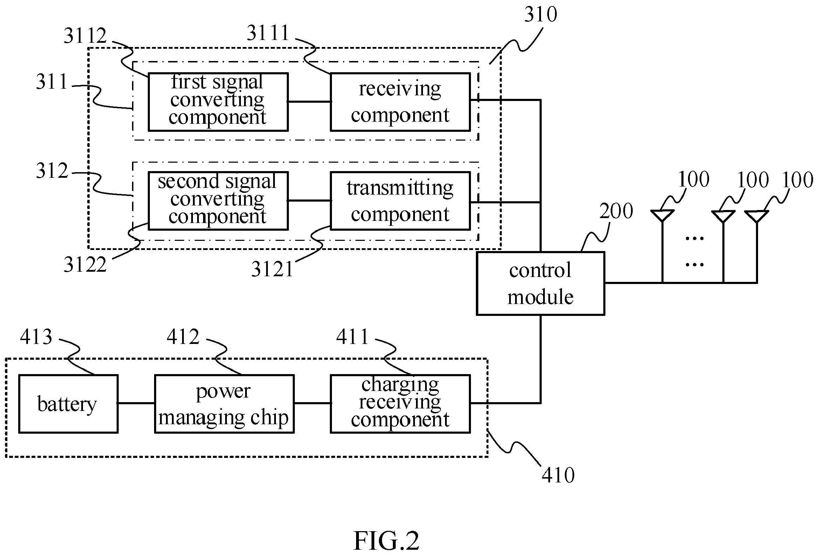

Furthermore, FIG. 2 is a circuit diagram of a wireless charging apparatus according to some embodiments. As shown in FIG. 2, the wireless charging apparatus provided by embodiments of the present disclosure includes: a plurality of antennas 100, a control module 200, a communicating circuit 310, and a charging circuit 410.

Herein, the control module 200 is connected to the plurality of antennas 100, and the operating states of the control module 200 include a communicating state and a charging state. In some embodiments, the control module 200 includes a frequency adjustable component, and the signals of different frequency bands are obtained or transmitted by adjusting the frequency of the control module 200.

The communicating circuit 310 is connected to the control module 200, and transmits or receives a communication signal through the antennas 100 when the control module 200 is in the communicating state.

In some embodiments, the communicating circuit 310 includes a receiving circuit 311 and a transmitting circuit 312. The receiving circuit 311 includes a receiving component 3111 and a first signal converting component 3112. The receiving component 3111 is used to separate target communication information of a set frequency from the communication signal received by the antennas 100. The first signal converting component 3112 (e.g., including an operational amplifier, etc.) is used to convert the target communication information into an amplified signal, and convert the amplified signal into a digital signal.

The transmitting circuit 312 includes a second signal converting component 3122, and a transmitting component 3121. The second signal converting component 3122 converts the information to be transmitted, which is transmitted by the control module 200, into an analog signal, and amplifies the analog signal. The transmitting component 3121 controls the antennas 100 to transmit communication information at a set frequency according to the amplified analog signal.

The charging circuit 410 is connected to the control module 200, to receive an energy supply signal through the antennas 100 when the control module 200 is in the charging state. In some embodiments, the charging circuit 410 includes a charging receiving component 411, a power managing chip 412, and a battery 413. The charging receiving component 411 is used to receive a charging signal through the antennas 100 and convert the charging signal into a charging current so as to charge the battery 413 through the power managing chip 412.

When the charging circuit 410 is used, the control module 200 is configured to control, in response to detecting a charging trigger operation, a target antenna among the plurality of antennas 100 to be connected with the charging circuit 410 to charge the battery 412. In this case, the control module 200 is further configured to control an antenna other than the target antenna among the plurality of antennas to be connected with the communicating circuit 310 to realize the communication function.

By adopting the wireless charging apparatus and method provided by embodiments of the present disclosure, a communication function and a charging function are realized by using a same set of antennas 100. Under the premise of a certain number of antennas for communication, there is no need to add an additional charging coil or charging antenna in the terminal device. In addition, the volume of the antennas 100 is much smaller than the charging coil in the related technologies, and thus the terminal device provided by embodiments of the present disclosure can be used to effectively save the stacking space inside the terminal device, which is beneficial to the thin and light design of the terminal device. Further, the charging signal is a radio frequency signal, in a charging state, the terminal device is only required to be located within a range in which the energy supply signal transmitted by the charging apparatus can be received, the requirements for the relative position between the terminal device and the charging apparatus are low, which enables the user to hold the terminal device for activities, and optimizes the user experience.

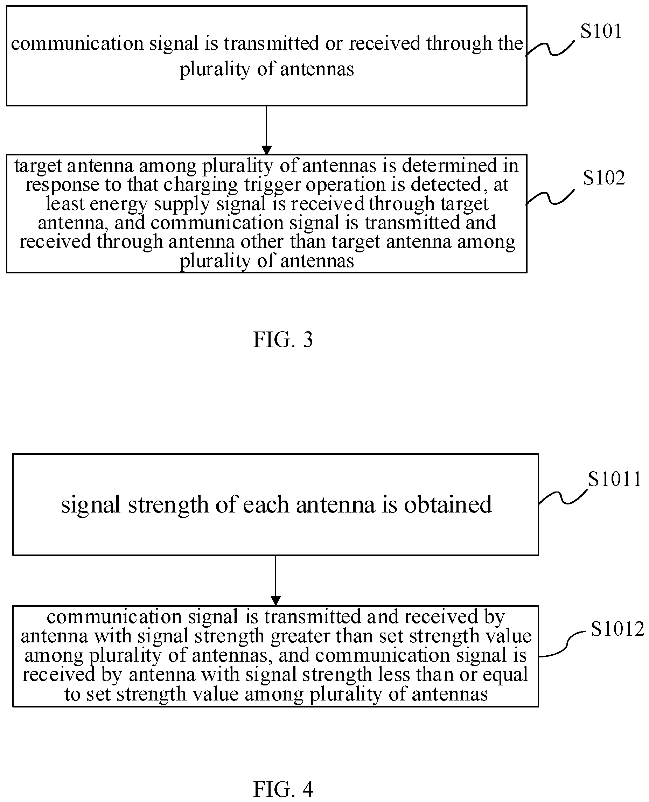

FIG. 3 is a schematic flowchart of a wireless charging method according to some embodiments. The wireless charging method provided by embodiments of the present disclosure is applied to the terminal device shown in FIG. 1. As shown in FIG. 3, the wireless charging method include:
step S101, a communication signal is transmitted or received through the plurality of antennas.

When the user holds the terminal device by hands to use it, some antennas can be blocked. The signal strength of different antennas varies based on a setting location of the antenna and an application scenario of the terminal device. In this case, the step S101 is implemented in a manner as shown in FIG. 4. FIG. 4 is a schematic flowchart of step S101 according to some embodiments. Step S101 can include:
Step S1011, the signal strength of each antenna is obtained.

The signal strength of the antenna is related to the power at which the signal is received by an antenna, which represents the communication ability of the antenna in the current operating environment. The greater the signal strength is, the stronger the communication capacity of the antenna is, and the lower the signal strength is, the weaker the communication capacity of the antenna is.

Step S1012, the communication signal is transmitted and received through an antenna with the signal strength greater than a set strength value among the plurality of antennas, and the communication signal is received through an antenna with the signal strength less than or equal to the set strength value among the plurality of antennas.

Herein, the set strength value is less than the maximum signal strength of the plurality of antennas and greater than the minimum signal strength of the plurality of antennas. In this way, the antenna having stronger signal strength among the plurality of antennas serves as a main operating antenna, and the antenna having poor signal strength serves as an auxiliary operating antenna. In addition, for the main operating antenna, it is optional to adopt the frequency division multiplexing to receive and transmit a communication signal through an antenna.

In this way, the antenna with the greater signal strength is used as the main operating antenna in different application scenarios of the terminal device such that the communication stability of the terminal device is ensured, and the user experience is optimized.

In step S102, a target antenna among the plurality of antennas is determined in response to that a charging trigger operation is detected, at least an energy supply signal is received through the target antenna, and the communication signal is transmitted and received through an antenna other than the target antenna among the plurality of antennas.

Herein, the charging trigger operation is not specifically limited. For example, the charging trigger operation is: a trigger operation of a charging option button, a voice command to start charging, the charge level of the battery 413 reaches a charging start threshold, and the like.

In some embodiments, determining a target antenna among the plurality of antennas in step S102 can include: determining the target antenna based on signal strengths of the plurality of antennas. In some embodiments, an antenna with the signal strength less than a set strength value among the plurality of antennas is used as the target antenna. In this way, wireless charging is realized on the premise of ensuring preferentially the communication stability of the terminal device.

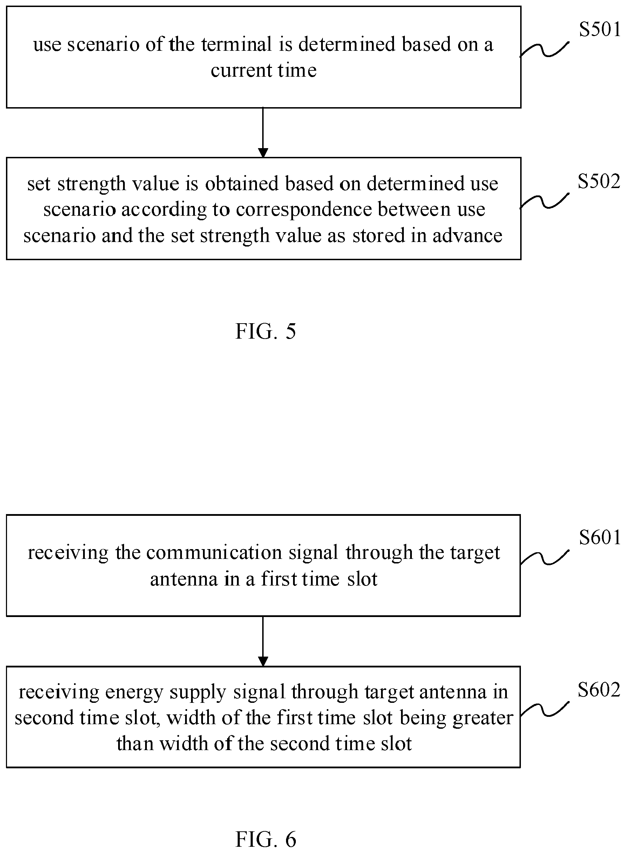

In an example, the set strength value is related to a current use scenario of the terminal device. FIG. 5 is a flowchart of obtaining a set strength value according to some embodiments. As shown in FIG. 5, the set strength value is obtained through the following steps.

Step S501: a use scenario of the terminal is determined based on a current time.

In some embodiments, the use scenario of the terminal includes a work scenario (e.g., a working period during a work day) and a leisure scenario (e.g., a time out period for a work day, and a rest day).

Step S502: a set strength value is obtained based on the determined use scenario according to correspondence between the use scenario and the set strength value as stored in advance.

The terminal device is used less frequently in the work scenario than that the terminal device is used in the leisure scenario. Therefore, the set strength value corresponding to the work scenario is set to be greater than the set strength value corresponding to the leisure scenario. That is, in the work scenario, an antenna with the stronger signal strength is adopted to receive the energy supply signal; and in the leisure scenario, an antenna with the weaker signal strength is adopted to receive the energy supply signal. In this way, the charging speed is raised in the work scenario, and the communication of the terminal device is ensured to be stable in the leisure scenario.

Of course, it is also possible to divide the use scenarios by statistically analyzing the usage habits of the user, and the terminal device is employed by the user at a different frequency in different usage scenarios.

In embodiments of the present disclosure, receiving at least an energy supply signal through the target antenna among the plurality of antennas in step S102 includes multiple implementations.

As a first implementation, receiving at least an energy supply signal through the target antenna among the plurality of antennas in step S102 can include: determining whether remaining charge level of the terminal device is greater than a set charge level value; if the remaining charge level of the terminal device is greater than a predetermined charge level value, then receiving the energy supply signal and the communication signal through the target antenna; and if the remaining charge level of the terminal device is not greater than a predetermined charge level value, then receiving the energy supply signal through the target antenna.

In this way, when the charge level of the terminal device is relatively low (that is, less than or equal to the set charge level value), the terminal device is preferentially ensured to have sufficient charge level. Specifically, only the energy supply signal is received through the target antenna to raise the charging speed. When the charge level of the terminal device is relatively high (that is, greater than the set charge level value), the communication performance is ensured preferentially. Specifically, the communication signal and the energy supply signal are received through the target antenna, and wireless charging is realized on the premise of ensuring stable communication performance.

As a second implementation, FIG. 6 is a schematic flowchart of a wireless charging method according to another exemplary embodiment. As shown in FIG. 6, receiving at least an energy supply signal through the target antenna in step S102 can includes:
step S601, receiving the communication signal through the target antenna in a first time slot; and
step S602, receiving the energy supply signal through the target antenna in a second time slot, a width of the first time slot being greater than a width of the second time slot.

In this way, the same target antenna is used to receive the communication signal and the energy supply signal. In some embodiments, the control module in the terminal device adjusts and controls the receiving frequency of the target antenna in the first time slot so that the antenna receives the communication signal; and the control module adjusts and controls the receiving frequency of the target antenna in the second time slot so that the antenna receives the power supply signal.

Herein, the width of the first time slot is greater than the width of the second time slot, and the wireless charging is realized on the premise of ensuring stable communication performance of the terminal device, which optimizes the user experience. Herein, the sequence of steps S601 and S602 is not specifically limited.

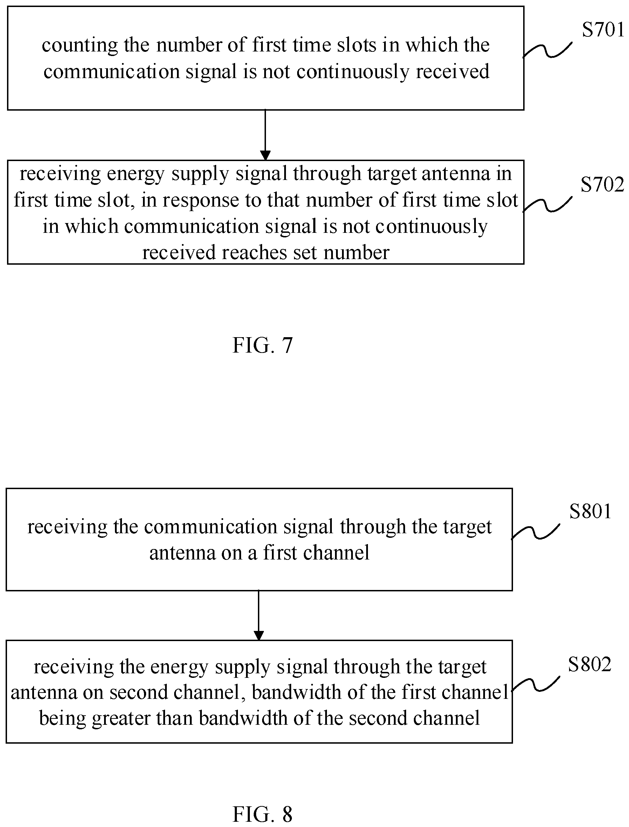

Further, FIG. 7 is a schematic flowchart of a wireless charging method according to another exemplary embodiment. As shown in FIG. 7, receiving at least an energy supply signal through the target antenna further includes:
step S701, counting the number of first time slots in which the communication signal is not continuously received; and
step S702, receiving the energy supply signal through the target antenna in the first time slot, in response to that the number of the first time slot in which the communication signal is not continuously received reaches a set number.

If no communication signal is received in the set number of consecutive first time slots, it indicates that the current communication demand of the terminal device is weak. At this time, the power supply signal is also received through the target antenna in the first time slot. In this way, it is equivalent to having extended the time for receiving the power supply signal, thereby improving the charging efficiency and optimizing the charging speed. Herein, the set number of consecutive first time slots is not specifically limited.

As a third implementation, FIG. 8 is a schematic flowchart of a wireless charging method according to another exemplary embodiment. As shown in FIG. 8, receiving at least an energy supply signal through the target antenna in step S102 can include:
step S801, receiving the communication signal through the target antenna on a first channel; and
step S802, receiving the energy supply signal through the target antenna on a second channel, the bandwidth of the first channel being greater than the bandwidth of the second channel.

The communication signal and the energy supply signal use different frequency bands. The same target antenna is used to simultaneously receive the communication signal and the energy supply signal through steps S801 and S802. In some embodiments, the control module in the terminal device separates and demodulates the signal received by the target antenna to obtain the communication signal and the energy supply signal. Herein, the sequence of steps S801 and S802 is not specifically limited.

The wireless charging method provided by embodiments of the present disclosure realizes a communication function and a wireless charging function of a terminal device based on a same set of antennas. Compared with the solution that a charging coil is provided in the terminal device in the related technologies, the wireless charging method provided in embodiments of the present disclosure does not need to increase the number of components in the terminal device, and effectively saves the stacking space inside the terminal device. In addition, the wireless charging method has low requirements for location relationship between the terminal device and the charging apparatus, and can implement wireless charging during a normal use process when the user holds the terminal device by hands, which optimizes the user experience.

Based on the foregoing wireless charging method, embodiments of the present disclosure further provide a wireless charging apparatus. The apparatus is applied to a terminal device, and the terminal device includes a plurality of antennas.

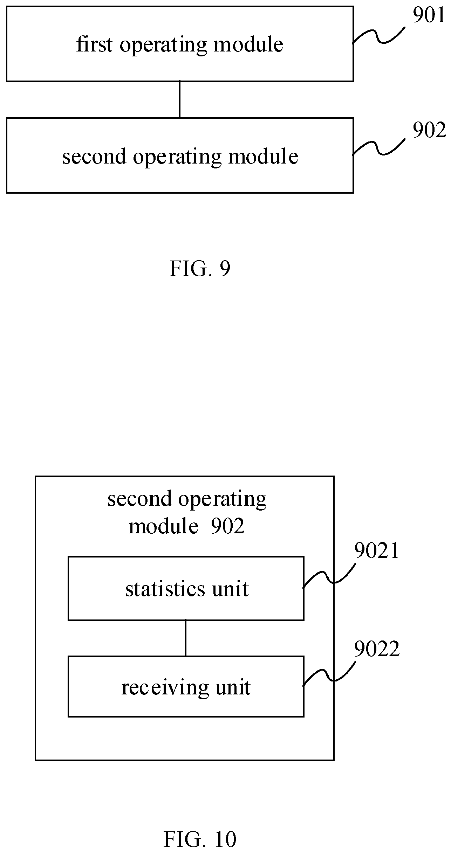

FIG. 9 is a block diagram of a wireless charging apparatus according to some embodiments, as shown in FIG. 9, the apparatus includes:
a first operating module 901 configured to transmit or receive a communication signal through the plurality of antennas; and
a second operating module 902 configured to determine a target antenna among the plurality of antennas in response to that a charging trigger operation is detected, receive at least an energy supply signal through the target antenna, and transmit and receive a communication signal through an antenna other than the target antenna among the plurality of antennas.

In some embodiments, when receiving at least an energy supply signal, the second operating module 902 is specifically configured to: determine whether remaining charge level of the terminal device is greater than a set charge level value; if the remaining charge level of the terminal device is greater than a predetermined charge level value, then receive the energy supply signal and the communication signal through the target antenna; and if the remaining charge level of the terminal device is not greater than a predetermined charge level value, then receive the energy supply signal through the target antenna.

In some embodiments, when receiving at least an energy supply signal, the second operating module 902 is specifically configured to:
receive the communication signal through the target antenna in a first time slot; and
receive the energy supply signal through the target antenna in a second time slot, a width of the first time slot being greater than a width of the second time slot.

Further, FIG. 10 is a block diagram of a second operating module according to some embodiments. As shown in FIG. 10, the second operating module 902 includes:
a statistics unit 9021 configured to count the number of first time slots in which the communication signal is not continuously received; and
a receiving unit 9022 configured to receive the energy supply signal in the first time slot through the target antenna in response to that the number reaches a set number.

In some embodiments, when receiving at least an energy supply signal, the second operating module 902 is specifically configured to:
receive the communication signal through the target antenna on a first channel; and
receive the energy supply signal through the target antenna on a second channel, a bandwidth of the first channel being greater than a bandwidth of the second channel.

In some embodiments, when determining a target antenna among the plurality of antennas, the second operating module 902 is specifically configured to: determine the target antenna according to the signal strengths of the plurality of antennas.

Based on the foregoing wireless charging method, embodiments of the present disclosure further provide a terminal device. In some embodiments, the terminal device is selected among a mobile phone, a tablet computer, a wearable device, a car device, or a medical device, etc.

The terminal device includes: a plurality of antennas; a memory; and a processor. The memory stores executable instructions. The processor is configured to execute executable instructions in the memory to implement steps of the wireless charging methods provided above.

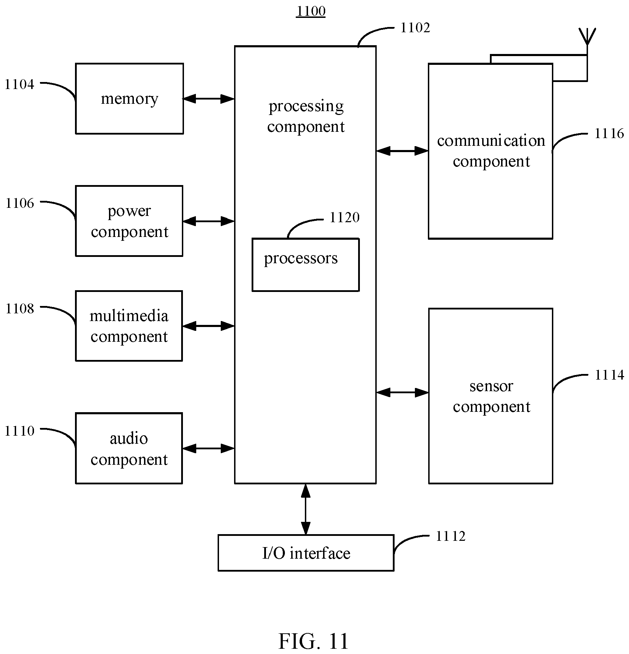

FIG. 11 is a block diagram of a terminal device according to some embodiments. Referring to FIG. 11, the terminal device 1100 can include one or more of the following components: a processing component 1102, a memory 1104, a power component 1106, a multimedia component 1108, an audio component 1110, an input/output (I/O) interface 1112, a sensor component 1114, a communication component 1116, and an image acquisition component.

The processing component 1102 typically controls overall operations of the terminal device 1100, such as the operations associated with display, telephone calls, data communications, camera operations, and recording operations. The processing component 1102 can include one or more processors 1120 to execute instructions. Moreover, the processing component 1102 can include one or more modules which facilitate the interaction between the processing component 1102 and other components. For instance, the processing component 1102 can include a multimedia module to facilitate the interaction between the multimedia component 1108 and the processing component 1102.

The memory 1104 is configured to store various types of data to support the operation of the terminal device 1100. Examples of such data include instructions for any applications or methods operated on the terminal device 1100, contact data, phonebook data, messages, pictures, video, etc. The memory 1104 can be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1106 provides power to various components of the terminal device 1100. The power component 1106 can include a power management system, one or more power sources, and any other components associated with the generation, management, and distribution of power in the terminal device 1100.

The multimedia component 1108 includes a screen providing an output interface between the terminal device 1100 and the user. In some embodiments, the screen can include a liquid crystal display (LCD) and a touch panel (TP). In some embodiments, organic light-emitting diode (OLED) displays can be adopted.

If the screen includes the touch panel, the screen can be implemented as a touch screen to receive input signals from the user. The touch panel includes one or more touch sensors to sense touches, swipes, and gestures on the touch panel. The touch sensors can not only sense a boundary of a touch or swipe action, but also sense a period of time and a pressure associated with the touch or swipe action.

The audio component 1110 is configured to output and/or input audio signals. For example, the audio component 1110 includes a microphone ("MIC") configured to receive an external audio signal when the terminal device 1100 is in an operation mode, such as a call mode, a recording mode, and a voice recognition mode. The received audio signal can be further stored in the memory 1104 or transmitted via the communication component 1116. In some embodiments, the audio component 1110 further includes a speaker to output audio signals.

The I/O interface 1112 provides an interface between the processing component 1102 and peripheral interface modules, the peripheral interface modules can be a keyboard, a click wheel, buttons, and the like.

The sensor component 1114 includes one or more sensors to provide status assessments of various aspects of the terminal device 1100. For instance, the sensor component 1114 can detect an open/closed status of the terminal device 1100, relative positioning of components, e.g., the display and the keypad, of the terminal device 1100, and the sensor component 1114 can also detect a change in position of the terminal device 1100 or a component of the terminal device 1100, a presence or absence of user contact with the terminal device 1100, an orientation or an acceleration/deceleration of the terminal device 1100, and a change in temperature of the terminal device 1100. The sensor component 1114 can also include a light sensor, which is disposed below the OLED display.

The communication component 1116 is configured to facilitate communication, wired or wirelessly, between the terminal device 1100 and other devices. The terminal device 1100 can access a wireless network based on a communication standard, such as Wi-Fi, 2G, 3G, 4G, 5G or a combination thereof. In one exemplary embodiment, the communication component 1116 receives a broadcast signal or broadcast associated information from an external broadcast management system via a broadcast channel. In one exemplary embodiment, the communication component 1116 further includes a near field communication (NFC) module to facilitate short-range communications. For example, the NFC module can be implemented based on a radio frequency identification (RFID) technology, an infrared data association (IrDA) technology, an ultra-wideband (UWB) technology, a Bluetooth (BT) technology, and other technologies.

In exemplary embodiments, the terminal device 1100 can be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components.

In embodiments of the present disclosure, there is further provided a charging system or wireless charging set, including: a charging apparatus and a terminal device as provided above. Herein, the charging apparatus is a radio frequency charging apparatus. At the time of use, the charging apparatus transmits an energy supply signal to the terminal device in response to a charging request transmitted by the terminal device, so that an antenna of the terminal device receives the charging request.

In embodiments of the present disclosure, there is further provided a readable storage medium having executable instructions stored thereon. When the executable instructions are executed by a processor of a terminal device, steps of the above-described wireless charging method are implemented. Herein, the computer-readable storage medium can be a ROM, a RAM, a CD-ROM, a magnetic tape, a floppy disc, an optical data storage device, and the like.

The wireless charging method and apparatus, the terminal device, the charging system, and the storage medium provided by the various embodiments of present disclosure can have one or more of the following advantages.

A communication function and a wireless charging function of a terminal device can be realized based on a same set of antennas. Compared with the solution that a charging coil is provided in the terminal device, the wireless charging method provided in embodiments of the present disclosure does not need to increase the number of components in the terminal device, and effectively saves the stacking space inside the terminal device. In addition, the wireless charging method has low requirements for location relationship between the terminal device and the charging apparatus, and can implement wireless charging during a normal use process when the user holds the terminal device by hands, which optimizes the user experience.

The various device components, modules, units, blocks, or portions may have modular configurations, or are composed of discrete components, but nonetheless can be referred to as "modules" in general. In other words, the "components," modules," "blocks," "portions," or "units" referred to herein may or may not be in modular forms, and these phrases may be interchangeably used.

Implementations of the subject matter and the operations described in this disclosure can be implemented in digital electronic circuitry, or in computer software, firmware, or hardware, including the structures disclosed herein and their structural equivalents, or in combinations of one or more of them. Implementations of the subject matter described in this disclosure can be implemented as one or more computer programs, i.e., one or more portions of computer program instructions, encoded on one or more computer storage medium for execution by, or to control the operation of, data processing apparatus.

Alternatively, or in addition, the program instructions can be encoded on an artificially-generated propagated signal, e.g., a machine-generated electrical, optical, or electromagnetic signal, which is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of them.

Moreover, while a computer storage medium is not a propagated signal, a computer storage medium can be a source or destination of computer program instructions encoded in an artificially-generated propagated signal. The computer storage medium can also be, or be included in, one or more separate components or media (e.g., multiple CDs, disks, drives, or other storage devices). Accordingly, the computer storage medium can be tangible.

The operations described in this disclosure can be implemented as operations performed by a data processing apparatus on data stored on one or more computer-readable storage devices or received from other sources.

The devices in this disclosure can include special purpose logic circuitry, e.g., an FPGA (field-programmable gate array), or an ASIC (application-specific integrated circuit). The device can also include, in addition to hardware, code that creates an execution environment for the computer program in question, e.g., code that constitutes processor firmware, a protocol stack, a database management system, an operating system, a cross-platform runtime environment, a virtual machine, or a combination of one or more of them. The devices and execution environment can realize various different computing model infrastructures, such as web services, distributed computing, and grid computing infrastructures.

Various modifications of, and equivalent acts corresponding to, the disclosed aspects of the example embodiments, in addition to those described above, can be made by a person of ordinary skill in the art, having the benefit of the present disclosure, without departing from the scope of the disclosure defined in the following claims, the scope of which is to be accorded the broadest interpretation so as to encompass such modifications and equivalent structures.

Some other embodiments of the present disclosure can be available to those skilled in the art upon consideration of the specification and practice of the various embodiments disclosed herein. The present application is intended to cover any variations, uses, or adaptations of the present disclosure following general principles of the present disclosure and include the common general knowledge or conventional technical means in the art without departing from the present disclosure. The specification and examples can be shown as illustrative only, and the true scope of the disclosure is indicated by the following claims.

## Claims

1. A wireless charging method, **characterized in that** the method is applied to a terminal device including a plurality of antennas, and the method comprises:
transmitting or receiving (SI01) a communication signal through the plurality of antennas; and
in response to that a charging trigger operation is detected, determining (S102) a target antenna among the plurality of antennas, receiving (S102) at least an energy supply signal through the target antenna, and transmitting and receiving (S102) a communication signal through an antenna other than the target antenna among the plurality of antennas.

2. The method according to claim 1, wherein the receiving (SI02) at least an energy supply signal through the target antenna among the plurality of antennas comprises:
determining whether remaining charge level of the terminal device is greater than a predetermined charge level value; and
responsive to that the remaining charge level of the terminal device is greater than a predetermined charge level value, receiving the energy supply signal and the communication signal through the target antenna; and responsive to that the remaining charge level of the terminal device is not greater than a predetermined charge level value, receiving the energy supply signal through the target antenna.

3. The method according to claim 1, wherein the receiving (SI02) at least an energy supply signal through the target antenna comprises:
receiving (S601) the communication signal through the target antenna in a first time slot; and
receiving (S602) the energy supply signal through the target antenna in a second time slot, and a width of the first time slot being greater than a width of the second time slot.

4. The method according to claim 3, wherein the receiving (S102) at least an energy supply signal through the target antenna further comprises:
counting (S701) the number of first time slots in which the communication signal is not continuously received; and
receiving (S702) the energy supply signal through the target antenna in the first time slot in response to that the number reaches a set number.

5. The method according to claim 1, wherein the receiving at least an energy supply signal through the target antenna comprises:
receiving (S801) the communication signal through the target antenna on a first channel; and
receiving (S802) the energy supply signal through the target antenna on a second channel, and a bandwidth of the first channel being greater than a bandwidth of the second channel.

6. The method according to claim 1, wherein the determining a target antenna among the plurality of antennas comprises: determining the target antenna based on signal strengths of the plurality of antennas.

7. A wireless charging apparatus, wherein the apparatus is applied to a terminal device including a plurality of antennas, and the apparatus comprises:
a first operating module (901) transmitting or receiving a communication signal through the plurality of antennas; and
a second operating module (902) determining a target antenna among the plurality of antennas in response to that a charging trigger operation is detected, receive at least an energy supply signal through the target antenna, and transmit and receive a communication signal through an antenna other than the target antenna among the plurality of antennas.

8. The apparatus according to claim 7, wherein the second operating module (902) is further configured to, when receiving at least an energy supply signal:
determine whether remaining charge level of the terminal device is greater than a set charge level value; and
responsive to that the remaining charge level of the terminal device is greater than a predetermined charge level value, receive the energy supply signal and the communication signal through the target antenna; and responsive to that the remaining charge level of the terminal device is not greater than a predetermined charge level value, receive the energy supply signal through the target antenna.

9. The apparatus according to claim 7, wherein the second operating module (902) is further configured to, when receiving at least an energy supply signal:
receive the communication signal through the target antenna in a first time slot; and
receive the energy supply signal through the target antenna in a second time slot, and a width of the first time slot being greater than a width of the second time slot.

10. The apparatus according to claim 9, wherein the second operating module (902) is further configured to:
a statistics unit (9021) configured to count the number of first time slots in which the communication signal is not continuously received; and
a receiving unit (9022) configured to control receiving the energy supply signal in the first time slot through the target antenna in response to that the number reaches a set number.

11. The apparatus according to claim 7, wherein the second operating module (902) is further configured to control, when receiving at least an energy supply signal:
receiving the communication signal through the target antenna on a first channel; and
receiving the energy supply signal through the target antenna on a second channel, and a bandwidth of the first channel being greater than a bandwidth of the second channel,
preferably,
the second operating module (902) is further configured to, when determining a target antenna among the plurality of antennas:
determine the target antenna based on signal strengths of the plurality of antennas.

12. A wireless charging apparatus, comprising:
a plurality of antennas;
a control device connected to the plurality of antennas, an operating state of which includes a communicating state and a charging state;
a communicating circuit connected to the control device, and configured to transmit or receive a communication signal through the antennas when the control device is in the communicating state; and
a charging circuit connected to the control device, and configured to receive an energy supply signal through the antennas when the control device is in the charging state;
wherein a target antenna among the plurality of antennas is controlled to be connected with the charging circuit, and an antenna other than the target antenna among the plurality of antennas is controlled to be coupled with the communicating circuit, by the control device, in response to that a charging trigger operation is detected.

13. The apparatus according to claim 12, wherein the communicating circuit comprises:
a receiving circuit configured to convert a communication signal received by the antennas into a digital signal; and
a transmitting circuit configured to convert a digital signal to be transmitted into an analog signal for being transmitted through the antennas.

14. A terminal device implementing the method according to any of claims 1-6, comprising:
a plurality of antennas;
memory storing instructions; and
a processor configured to execute the instructions to implement steps of the method.

15. A wireless charging set comprising the terminal device according to claim 14, and a charging apparatus comprising:
a control device having a communicating state and a charging state;
a communicating circuit coupled to the control device, and configured to transmit or receive the communication signal when the control device is in the communicating state; and
a charging circuit coupled to the control device, and configured to receive the energy supply signal when the control device is in the charging state,
preferably,
the plurality of antennas are disposed at different positions including upper and lower portions of the terminal device, to thereby have different signal strengths in different use scenarios;
the terminal device is configured to:
select a main operating antenna based a stronger signal strength to ensure communication effects of the terminal device;
statistically analyze usage habits of a user to thereby determine a work usage and a leisure scenario;
obtain a first predetermined signal strength value corresponding to the determined work usage that is larger than a second predetermined signal strength value corresponding to the determined leisure usage,
select, during the work usage, an antenna with stronger signal strength to receive the energy supply signal;
select, during the leisure usage, an antenna with weaker signal strength to receive the energy supply signal, thereby increasing charging speed during the work usage, and ensuring communication of the terminal device during the leisure usage;
determine whether remaining charge level of the terminal device is greater than a a predetermined charge level value;
responsive to that the remaining charge level of the terminal device is greater than the predetermined charge level value, receive both the energy supply signal and the communication signal through the target antenna;
responsive to that the remaining charge level of the terminal device is not greater than a predetermined charge level value, receive the energy supply signal through the target antenna, thereby increasing the charging speed when the charge level of the terminal device is relatively low, and ensuring the communication of the terminal device when the charge level of the terminal device is relatively high.
